# FASCICULE DE BREVET EUROPEEN

(11) **EP 3 869 627 B1**
(45) Date de publication et mention de la délivrance du brevet: **03.09.2025**
(21) Numéro de dépôt: 21157960.2
(22) Date de dépôt: 18.02.2021
(51) Int. Cl.: H01R 13/62, H01R 13/627

(54) **CONNECTEUR ELECTRIQUE A VERROUILLAGE ELECTRO-MECANIQUE**
ELEKTRISCHER ANSCHLUSS MIT ELEKTROMECHANISCHER VERRIEGELUNG
ELECTRICAL CONNECTOR WITH ELECTROMECHANICAL LOCKING

(30) Priorité: 24.02.2020 FR 2001791
(43) Date de publication de la demande: 25.08.2021
(73) Titulaire: Airbus Operations (S.A.S.), 31060 Toulouse Cedex 9 (FR)
(72) Inventeur: BAENA, Pierre, 31060 TOULOUSE Cedex 9 (FR)
(74) Mandataire: Cabinet Le Guen Maillet

(56) Documents cités:
- WO-A1-2011/071170
- CN-A- 109 004 452
- JP-A- 2005 235 679

## Description

### DOMAINE TECHNIQUE

La présente invention concerne le domaine de la connectique. La présente invention concerne plus particulièrement un connecteur électrique à verrouillage électromécanique pour l'interconnexion d'équipements techniques et notamment des systèmes électriques EWIS (de l'acronyme anglais « Electrical Wiring Interconnexion System »), en particulier à bord d'un aéronef, ainsi qu'un aéronef comportant au moins un tel connecteur électrique.

### ETAT DE LA TECHNIQUE ANTERIEURE

Des systèmes électriques, électroniques et informatiques, encore appelés communément systèmes embarqués, sont largement utilisés dans les transports, y compris les transports aériens. De tels systèmes requièrent d'être connectés à une ou plusieurs sources d'énergie et requièrent souvent d'être interconnectés entre eux.

La connectique est fréquemment identifiée comme un des points de fragilité d'un harnais d'interconnexion entre des équipements électriques. La part des équipements électriques est de plus en plus importante à bord des aéronefs. Ce phénomène s'accompagne d'une augmentation de courants et de tensions appliqués à des équipements, aussi bien en régime permanent qu'en régime transitoire.

Les systèmes d'interconnexion des équipements doivent être adaptés en conséquence pour garantir une fiabilité compatible avec la sécurité des équipements et des personnes. Le document CN 109009452 A décrit un connecteur électrique selon le préambule de la revendication 1.

### EXPOSE DE L'INVENTION

La présente invention vise notamment à améliorer et à sécuriser des connexions électriques entre différents équipements, en particulier embarqués dans un aéronef.

A cet effet, l'invention a pour objet de proposer un connecteur électrique comportant :
- une prise réalisée dans un matériau électriquement conducteur,
- un corps de connecteur réalisé dans un matériau électriquement isolant et dans lequel est fixée la prise, où le corps de connecteur présente une cavité permettant l'accès à la prise,
- une fiche de connexion réalisée dans un matériau électriquement conducteur et configurée pour s'insérer dans la cavité du corps de connecteur selon une direction d'insertion et venir en contact avec la prise, et,
- un système de verrouillage comportant un élément de verrouillage et un élément de rappel,
et dans lequel l'élément de verrouillage comprend un matériau ferromagnétique polarisé et est monté mobile, via l'élément de rappel, sur l'un parmi le corps de connecteur et la fiche de connexion, entre une position de verrouillage dans laquelle l'élément de verrouillage est logé dans une gorge formée dans la surface de l'autre parmi la fiche de connexion et le corps de connecteur, et une position de non-verrouillage dans laquelle ledit élément de verrouillage n'est pas logé dans ladite gorge, et où l'élément de rappel contraint l'élément de verrouillage en position de non-verrouillage.

Astucieusement, lorsqu'un courant électrique d'une intensité supérieure à un seuil prédéterminé traverse la fiche de connexion et la prise du connecteur électrique, le champ magnétique induit opère un déplacement de l'élément de verrouillage magnétisé entre la position de non-verrouillage et la position de verrouillage du connecteur électrique et verrouille la connexion de sorte à empêcher un retrait de la fiche de connexion de la prise.

Le connecteur électrique, selon l'invention, peut également comporter les caractéristiques suivantes, considérées seules ou en combinaison :
- L'élément de verrouillage est un plot de forme au moins partiellement complémentaire à la forme de ladite gorge, fixé sur l'élément de rappel, l'élément de rappel est un ressort fixé sensiblement perpendiculairement à la direction d'insertion, sur l'un parmi le corps de connecteur et la fiche de connexion, et le plot est monté mobile selon une direction transversale à la direction d'insertion.
- Le système de verrouillage est monté sur le corps de la prise.
- Le système de verrouillage est monté sur la fiche de connexion.
- L'élément de verrouillage présente une forme sphérique ou de section circulaire et la gorge présente une forme complémentaire à une forme sphérique ou à une section circulaire.
- L'élément de verrouillage est une lamelle magnétisée et l'élément de rappel est une lamelle élastique, les deux lamelles sont fixées l'une à l'autre par l'une de leurs extrémités respectives.
- L'élément de verrouillage est une partie centrale d'un système de verrouillage monobloc comprenant une partie périphérique souple et préférentiellement élastique formant un élément de rappel.
- Le connecteur électrique comprend une pluralité de systèmes de verrouillage répartis autour de la direction d'insertion, préférentiellement uniformément répartis autour de la direction d'insertion.

L'invention a également pour objet un système électrique ou électronique configuré pour implémenter une ou des fonctions avioniques comprenant au moins un connecteur électrique tel que précédemment décrit.

Enfin, l'invention a pour objet un aéronef comprenant au moins un système électrique ou électronique tel que précité.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un connecteur électrique selon un premier mode de réalisation, en configuration de déverrouillage ;
[Fig. 2] illustre schématiquement le connecteur électrique déjà représenté sur la Fig.1, en configuration de verrouillage ;
[Fig. 3] illustre schématiquement un connecteur électrique selon un deuxième mode de réalisation, en configuration de déverrouillage ;
[Fig. 4] illustre schématiquement le connecteur électrique déjà représenté sur la Fig.3, en configuration de verrouillage ;
[Fig. 5] illustre schématiquement un connecteur électrique selon un troisième mode de réalisation ;
[Fig. 6] illustre schématiquement un connecteur électrique selon un quatrième mode de réalisation ;
[Fig. 7] illustre schématiquement un connecteur électrique selon un cinquième mode de réalisation ; et,
[Fig. 8] illustre un aéronef comprenant un connecteur électrique selon un mode de réalisation.

### EXPOSE DETAILLE DE MODES DE REALISATION

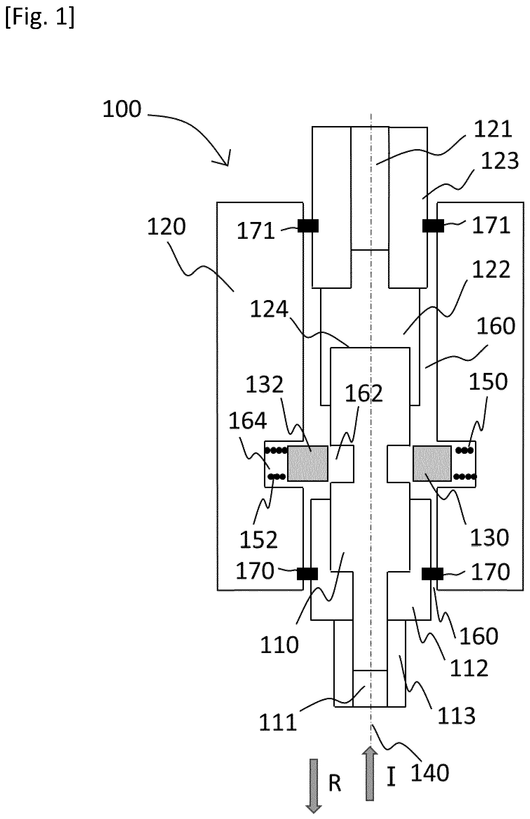

La Fig. 1 est une section représentant schématiquement un connecteur électrique 100 selon un mode de réalisation.

Le connecteur électrique 100 comprend une prise 122. La prise 122 est fabriquée dans un matériau électriquement conducteur et est fixée dans un premier corps 120, encore appelé « corps de connecteur », du connecteur 100. Selon des variantes de réalisation, la prise 122 peut être fixée solidairement au corps de connecteur 120 ou encore de façon amovible.

Le corps de connecteur 120 est fabriqué dans un matériau électriquement isolant. La prise 122 est configurée pour être connectée à un premier câble 121, par exemple par soudage ou sertissage. Le premier câble 121 est entouré d'une gaine 123 réalisée en matériau électriquement isolant. Dans le mode de réalisation représenté ici, la connexion de la prise 122 avec le câble 121 s'effectue du côté opposé à son extrémité configurée pour recevoir la fiche de connexion 110, c'est-à-dire du côté supérieur sur la Fig.1.

Le connecteur électrique 100 comprend également une fiche de connexion 110 qui est fabriquée dans un matériau électriquement conducteur et qui est fixée ici dans un deuxième corps 112. Le corps 112 de la fiche de connexion 110 est réalisé en matériau électriquement isolant. Selon une variante du mode de réalisation, la fiche de connexion 110 est dépourvue de corps et le corps 112 n'existe pas.

La fiche de connexion 110 est configurée pour être connectée à un second câble 111, par exemple par soudage ou sertissage. Le second câble 111 est entouré d'une gaine 113 réalisée en matériau électriquement isolant. Dans le mode de réalisation présenté ici, la connexion au câble 111 s'effectue du côté opposé à son extrémité, c'est-à-dire du côté inférieur sur la Fig.1.

Selon un mode de réalisation, le matériau du corps de connecteur 120 du connecteur 100 présente des caractéristiques mécaniques et diélectriques similaires au matériau du deuxième corps 112. Par exemple les matériaux du corps de connecteur 120 et du deuxième corps 112 sont identiques. Selon une variante, le matériau du corps de connecteur 120 est différent du matériau du deuxième corps 112.

Le corps de connecteur 120 présente une cavité 160 permettant d'y fixer la prise 122 et de fournir de plus un accès à la prise 122 pour la fiche de connexion 110. La cavité 160 définit un volume creux autour d'une direction d'insertion 140. La cavité 160 est agencée pour recevoir la fiche de connexion 110, éventuellement pourvue du corps 112 (optionnel), et permettre un guidage aisé de la fiche de connexion 110 vers la prise 122. La cavité 160 permet une mise en contact de la prise 122 avec la fiche de connexion 110. La prise 122 est maintenue dans le corps de connecteur 120 grâce à un système mécanique de rétention 171. Selon un principe de fixation analogue, la fiche de connexion 110 est maintenue dans le corps de connecteur 120 grâce à un système mécanique de rétention 170.

Lorsque la fiche de connexion 110 comprend un corps 112, le système mécanique de rétention 170 peut être agencé entre le corps 112 et le corps de connecteur 120 (tel que représenté sur les figures) ou encore entre la fiche de connexion 110 et le corps de connecteur 120. Lorsque la fiche de connexion 110 ne comprend pas le corps 112 (optionnel), le système mécanique de rétention est agencé entre la fiche de connexion 110 et le corps de connecteurs 120.

Selon un mode de réalisation, les systèmes mécaniques de rétention 170 et 171 comprennent chacun une rondelle élastique enserrée entre deux gorges. Selon des variantes, les systèmes mécaniques 170 et 171 comprennent chacun une collerette et un clip ou des formes complémentaires (concave et convexe) configurées pour opérer un verrouillage mécanique en translation de la prise 122 et de la fiche de connexion 110, par rapport au corps de connecteur 120, selon la direction d'insertion 140. Les systèmes mécaniques de rétention 170 et 171 ne sont pas décrits ici plus en détails dans la mesure où cela n'est pas utile à la compréhension et à la mise en œuvre de l'invention.

L'introduction de la fiche de connexion 110 dans le corps de connecteur 120 s'effectue parallèlement à la direction d'insertion 140. Le sens d'insertion de la fiche de connexion 110 dans le corps de connecteur 120 est représenté par une flèche I sur la Fig.1 et le sens de retrait de la fiche de connexion 110 du corps de connecteur 120 est représenté par une flèche R sur la Fig.1.

Ainsi, un contact physique entre la fiche de connexion 110 et la prise 122 établit une continuité électrique entre le premier câble 121 et le second câble 111.

Dans le mode de réalisation de l'invention présenté sur les figures, la prise 122 est du type femelle et présente un logement 124 et la fiche de connexion 110 est du type mâle. Ainsi, la fiche de connexion 110 s'insère d'abord dans la cavité 160 du corps de connecteur 120, puis dans le logement 124 de la prise 122 qui est de forme sensiblement complémentaire à l'extrémité de la fiche de connexion 110.

Bien évidemment, selon une variante, la fiche de connexion 110 peut être agencée de sorte à être de type femelle et la prise 122 peut être agencée de sorte à être de type mâle.

Selon le mode de réalisation représenté, la fiche de connexion 110 présente une première gorge 162 droite circulaire formée dans sa surface.

Le corps de connecteur 120 présente une deuxième gorge 164 droite circulaire formée dans la surface de la cavité 160.

La première gorge 162 est en regard de la deuxième gorge 164 quand la fiche de connexion 110 est insérée dans le corps de connecteur 120 et vient en contact avec la prise 122, selon le sens d'insertion représenté par la flèche I.

Les termes « gorge droite circulaire » sont à interpréter ici comme une gorge au fond droit s'étendant sur une surface d'une pièce de section circulaire, telle que la surface intérieure de la cavité 160 ou la surface extérieure de la fiche de connexion 110.

Selon le mode de réalisation représenté sur la Fig. 1, au moins un système de verrouillage est logé dans la deuxième gorge 164 du corps de connecteur 120. Le système de verrouillage comprend un élément de verrouillage 130 et un élément de rappel 150.

L'élément de verrouillage 130 comprend un matériau ferromagnétique polarisé et est monté mobile sur le corps de connecteur 120 entre une position de verrouillage dans laquelle l'élément de verrouillage est logé dans la première gorge 162 réalisée dans la fiche de connexion 110, et une position de non-verrouillage dans laquelle l'élément de verrouillage 130 est hors de la première gorge 162, et où l'élément de rappel 150 contraint l'élément de verrouillage 130 en position de non-verrouillage.

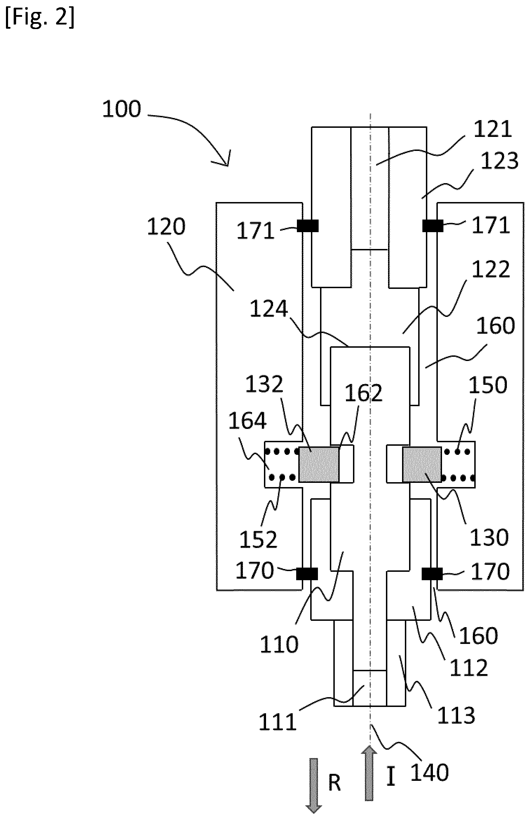

La position de non-verrouillage est représentée à la Fig. 1 et la position de verrouillage est représentée à la Fig. 2.

Dans le mode de réalisation représenté à la Fig. 1, l'élément de verrouillage 130 est un plot monté mobile en translation dans la deuxième gorge 164 et l'élément de rappel 150 est un ressort hélicoïdal fixé dans la deuxième gorge 164 entre le fond de la deuxième gorge 164 et le plot. Le plot est de forme au moins partiellement complémentaire à la forme de la première gorge 162. Le ressort est ici fixé sensiblement perpendiculairement à la direction d'insertion 140 et le plot est monté mobile selon une direction transversale à la direction d'insertion 140.

La fixation d'un élément de rappel dans la deuxième gorge 164 est réalisée, par exemple, par soudage, collage, ou encore par surmoulage au moment de la fabrication du connecteur électrique 100.

La polarisation magnétique de l'élément de verrouillage 130 est telle que, lorsqu'un courant d'une intensité supérieure à un seuil prédéterminé traverse le connecteur électrique 100, l'élément de verrouillage 130 passe de la position de non-verrouillage à la position de verrouillage sous l'effet d'un champ magnétique induit par le courant traversant le connecteur électrique 100. Inversement, lorsque l'intensité du courant dans le connecteur électrique 100 repasse sous le seuil prédéterminé, l'élément de rappel 150 ramène l'élément de verrouillage 130 en position de non-verrouillage. La force de rappel opérée par l'élément de rappel 150 du système de verrouillage est définie par rapport au seuil prédéterminé d'intensité du courant.

L'ensemble du système de verrouillage, c'est-à-dire l'assemblage de l'élément de verrouillage 130 et de l'élément de rappel 150, est configuré de sorte à ne pas faire obstacle à l'insertion de la fiche de connexion 110 dans la prise 122 lorsque aucun courant électrique ne traverse le connecteur 100.

Le verrouillage ainsi réalisé est de type électromécanique, d'origine électromagnétique. Ce verrouillage électromécanique est opéré en plus du verrouillage mécanique déjà réalisé grâce aux systèmes mécaniques de rétention 170 et 171 qui opèrent respectivement une fixation de la fiche de connexion 110 et de la prise 122 dans le corps de connecteur 120.

Avantageusement, l'élément de verrouillage 130 peut être recouvert, pour tout ou partie, d'un matériau électriquement isolant pour ne pas interagir avec les éléments de connexion électrique que sont la fiche de connexion 110 et la prise 122.

Le verrouillage est réalisé, ici, lorsqu'une surface de l'élément de verrouillage 130 sensiblement perpendiculaire à la direction d'insertion 140 prend appui sur une surface de la première gorge 162, laquelle surface est aussi sensiblement perpendiculaire à la direction d'insertion 140, de sorte à s'opposer à un retrait de la fiche de connexion 110 de la prise 122. Avantageusement, la forme de l'élément de verrouillage 130 est au moins partiellement complémentaire avec une forme de la première gorge 162 de sorte à éviter un jeu fonctionnel important et à garantir un bon contact physique entre l'extrémité de la fiche de connexion 110 et la prise 122, de manière que le contact physique en soit optimisé et sécurisé.

La Fig.1 illustre un connecteur électrique dont la section présente deux éléments de verrouillage identiques. Le premier système de verrouillage comprend l'élément de verrouillage 130 et l'élément de rappel 150. Le second système de verrouillage comprend un élément de verrouillage 132 et un élément de rappel 152. Selon une variante, le connecteur électrique 100 comprend un nombre de systèmes de verrouillage supérieur à deux et ces systèmes sont disposés régulièrement autour de la fiche de connexion 110, et donc autour de la direction d'insertion 140, dans la deuxième gorge 164.

Avantageusement, lorsque plusieurs éléments de verrouillage sont présents, ils peuvent tous être recouverts d'un matériau électriquement isolant pour ne pas interagir avec les éléments de connexion électrique. Selon des variantes et en fonction du mode de réalisation de la fiche de connexion 110 et de la prise 122, certains éléments de verrouillage seulement peuvent être recouverts, pour tout ou partie, d'un matériau électriquement isolant.

Un tel connecteur électrique rend donc difficile, voire impossible, pour une personne le manipulant, de débrancher la fiche de connexion, en charge, du fait de la présence du système de verrouillage électromagnétique, outre les systèmes mécaniques de rétention 170 et 171.

Avantageusement, en l'absence de déconnexion en charge, la création d'arc électrique liée à une telle déconnexion est évitée, ce qui permet de réduire l'usure des éléments aux points de contact mécanique.

Un autre avantage réside dans le fait qu'une déconnexion indésirable d'un système en fonction est rendue difficile voire impossible par le verrouillage du connecteur électrique. Un autre avantage encore réside dans le fait que l'effort de maintien des surfaces de contact l'une sur l'autre est optimisé, ce qui réduit sensiblement la résistance de contact présentée par le connecteur électrique et accroît la conductivité.

Enfin, le fait qu'il soit difficile, voire impossible pour un utilisateur, d'avoir accès à un élément sous tension du fait d'une déconnexion, accroît la protection et la sécurité des personnes.

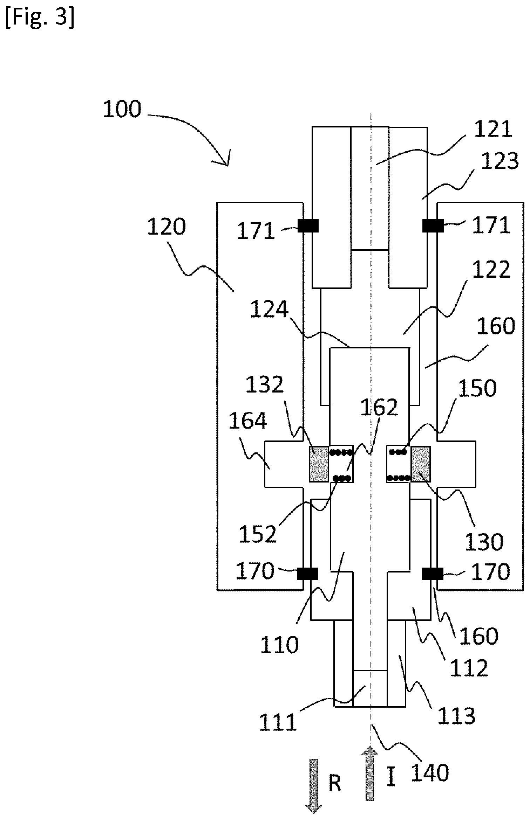

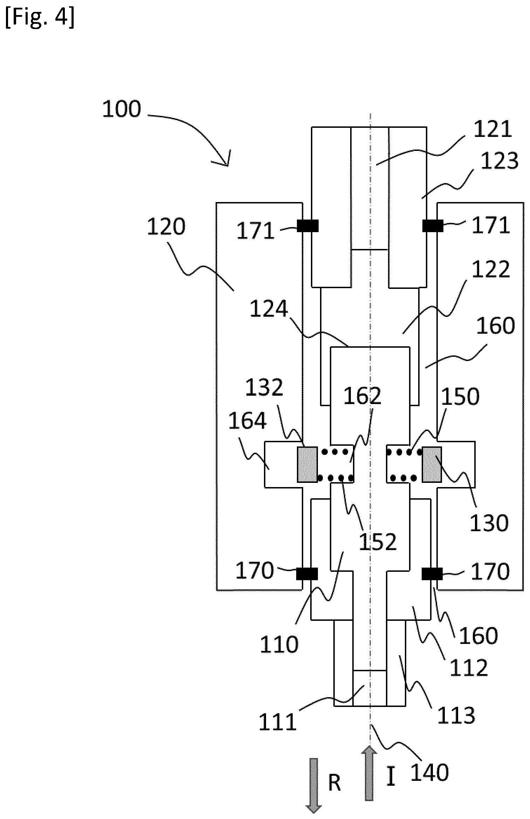

La Fig. 3 est une section représentant schématiquement un connecteur électrique 100 selon un deuxième mode de réalisation. Le connecteur électrique 100, selon ce deuxième mode de réalisation, est sensiblement similaire à celui décrit précédemment à l'exception du fait qu'au moins un système de verrouillage est logé dans la première gorge 162 de sorte que, dans la position de verrouillage, l'élément de verrouillage est logé dans la deuxième gorge 164 réalisée dans le corps de connecteur 120 et, dans la position de non-verrouillage, l'élément de verrouillage 130 est hors de la deuxième gorge 164. La position de non-verrouillage correspondant à ce mode de réalisation est représentée à la Fig. 3 et la position de verrouillage est représentée à la Fig. 4.

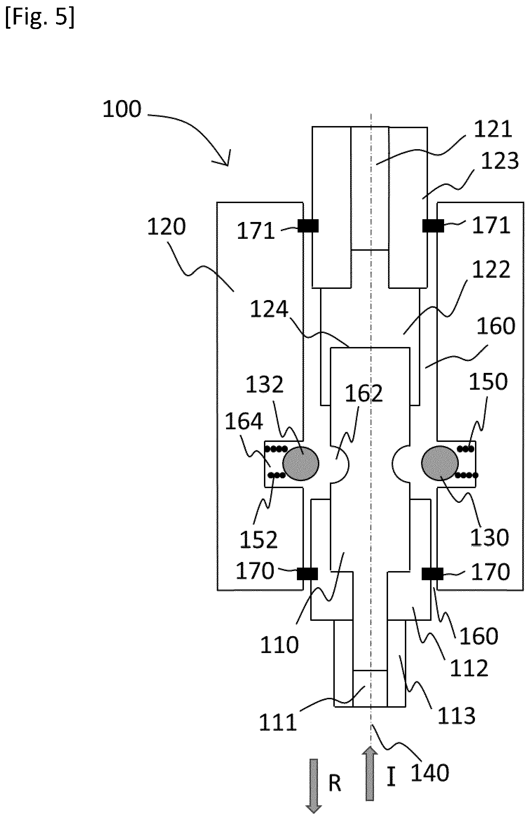

La Fig. 5 illustre un connecteur électrique 100 selon un troisième mode de réalisation. Selon ce troisième mode de réalisation, le connecteur électrique 100 est configuré selon un principe analogue à ceux précédemment décrits à l'exception du fait que la fiche de connexion 110 comprend une première gorge 162 qui présente une forme complémentaire à une forme sphérique ou à une section circulaire et que les éléments de verrouillage 130 et 132 présentent une forme sphérique ou une forme de section circulaire. La forme des éléments de verrouillage 130 et 132 est là encore au moins partiellement complémentaire à la forme de la première gorge 162.

Avantageusement, un verrouillage utilisant les éléments de verrouillage 130 et 132 agencés selon une forme sphérique ou de section circulaire, disposés dans la première gorge 162 de forme complémentaire, permet un verrouillage électromécanique du connecteur électrique 100 tout en présentant un retrait possible lorsqu'un utilisateur exerce une force importante dans le sens de retrait représenté par la flèche R. En effet, selon ce mode de réalisation, le verrouillage mis en œuvre ne présente pas de surfaces d'appui perpendiculaires à la direction d'insertion 140 du connecteur électrique 100 comme cela avait été vu précédemment. Ainsi, lorsqu'une force importante est exercée sur la fiche de connexion 110, par un utilisateur, et dans le sens d'un retrait, les éléments de verrouillage 130 et 132 peuvent être progressivement repoussés vers l'intérieur de la deuxième gorge 164 même en présence d'une force électromagnétique induite par le passage d'un courant électrique dans le connecteur électrique 100. Cette force doit cependant être suffisamment importante pour vaincre celle opérée sur le ou les éléments de verrouillage par la ou les forces électromagnétiques induites en présence d'un courant dans le connecteur électrique 100.

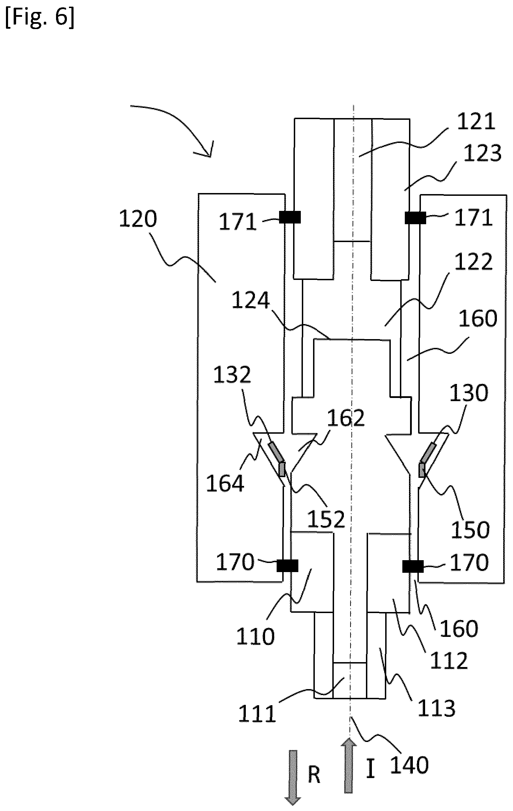

La Fig. 6 illustre un connecteur électrique 100 selon un quatrième mode de réalisation. Selon ce mode de réalisation, le connecteur électrique 100 est configuré selon un principe analogue à ceux précédemment décrits à l'exception du fait que la fiche de connexion 110 comprend une première gorge 162 formant une encoche, par exemple de forme triangulaire, et que le corps de connecteur 120 comprend également ici une deuxième gorge 164 formant une encoche agencée symétriquement à la première gorge 162.

Selon ce mode de réalisation, les systèmes de verrouillage comprennent des éléments de verrouillage 130 et 132 longiformes tels que des lamelles magnétisées.

Chaque élément de rappel 150, 152 est au moins partiellement déformable et est par exemple une lamelle élastique fixée par une extrémité à l'extrémité d'une lamelle magnétisée.

Chaque élément de verrouillage 130, 132, magnétisé et polarisé, peut être alternativement disposé le long du fond incliné de la première gorge 162 ou du fond incliné de la deuxième gorge 164.

Selon ce mode de réalisation, un verrouillage électromécanique est opéré par un appui des extrémités des éléments de verrouillage sur la surface de la première gorge 162 de la fiche de connexion 110 sensiblement perpendiculaire à la direction d'insertion 140 du connecteur électrique 100. A cet effet, et selon l'exemple décrit, la surface de la première gorge 162, perpendiculaire à la direction d'insertion 140, est située du côté de l'extrémité de la fiche de connexion 110 qui pénètre dans la prise 122.

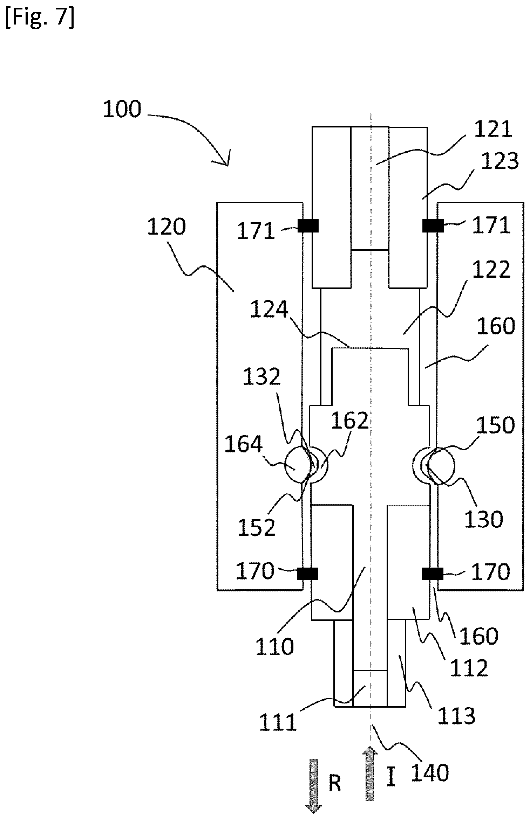

La Fig. 7 illustre un connecteur électrique 100 selon un cinquième mode de réalisation. Selon ce mode de réalisation, le connecteur électrique 100 est configuré selon un principe analogue à ceux déjà précédemment décrits à l'exception du fait que les systèmes de verrouillage sont monoblocs et présentent chacun une section arquée. Les systèmes de verrouillage selon ce mode de réalisation comprennent une partie centrale et une partie périphérique souple. La partie centrale est magnétisée, polarisée et forme l'élément de verrouillage. La partie périphérique souple est fixée autour de la partie centrale et elle la maintient solidaire du corps de connecteur 120. La partie périphérique souple est préférentiellement élastique, opérant un rappel, de sorte que la partie centrale puisse être déplacée alternativement vers l'intérieur de la première gorge 162 ou de la deuxième gorge 164. Selon ce mode de réalisation, le verrouillage électromécanique peut être déverrouillé en exerçant une force importante dans le sens de retrait symbolisé par la flèche R, dans la mesure où les éléments de verrouillage présentent des formes susceptibles d'être modifiées par un déplacement relatif de la première gorge 162 par rapport à la deuxième gorge 164, sous l'effet d'une traction exercée par un utilisateur.

Ainsi, un système de verrouillage du connecteur peut par exemple comprendre une pluralité d'éléments de verrouillages magnétisés présentant des formes au moins partiellement complémentaires à une forme d'une fiche de connexion et être sensiblement agencés de façon concentrique avec une fiche de connexion ou avec une section transversale d'une fiche de connexion. Par exemple, un système de verrouillage peut prendre la forme d'une couronne portant une pluralité de plots ferromagnétiques et polarisés, assemblés à l'intérieur ou à l'extérieur de la couronne via des éléments de rappels.

En outre, et selon des variantes de réalisation, les gorges 162 et 164 ne sont pas circulaires, c'est-à-dire qu'elles ne s'étendent pas respectivement sur toute la périphérie de la fiche de connexion 110 et du corps de connecteur 120 et forment de simples cavités, chacune de forme complémentaire à la forme d'un élément de verrouillage configuré pour opérer avec elle.

Des systèmes implémentant une ou plusieurs fonctions avioniques, ou plus largement les éléments techniques traditionnellement présents à bord des aéronefs, requièrent souvent d'être interconnectés entre eux par le biais de nombreux harnais de connexion ou liaisons filaires. Ainsi, un connecteur électrique tel que précédemment décrit est particulièrement avantageux lorsqu'il est intégré à un tel système. L'invention porte sur un système avionique comprenant un ou plusieurs connecteurs électriques tels que précités et sur un aéronef comprenant au moins un tel système avionique.

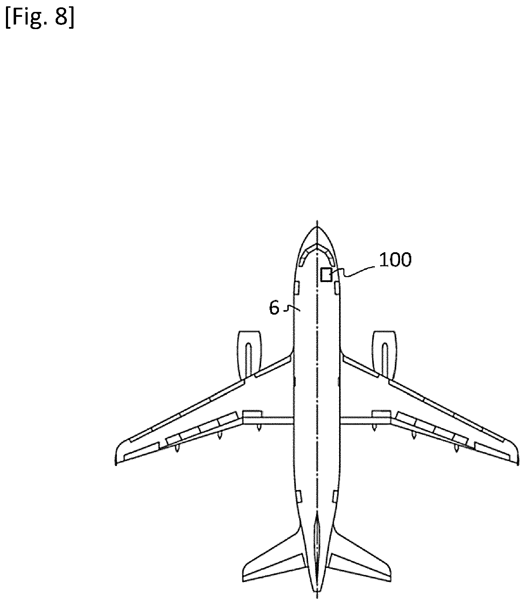

La Fig.8 représente un aéronef 6 comprenant un système avionique, lequel comprend un connecteur électrique 100.

## Revendications

1. Connecteur électrique (100) comportant :
- une prise (122) réalisée dans un matériau électriquement conducteur,
- un corps de connecteur (120) réalisé dans un matériau électriquement isolant et dans lequel est fixée la prise (122), où le corps de connecteur (120) présente une cavité (160) permettant l'accès à la prise (122),
- une fiche de connexion (110) réalisée dans un matériau électriquement conducteur et configurée pour s'insérer dans la cavité (160) selon une direction d'insertion (140) et venir en contact avec la prise (122), et,
- le connecteur électrique (100) comprenant :
- un système de verrouillage (130, 150) comportant un élément de verrouillage (130) et un élément de rappel (150),
l'élément de verrouillage (130) comprend un matériau ferromagnétique polarisé et est monté mobile sur l'un parmi le corps de connecteur (120) et la fiche de connexion (110) entre une position de verrouillage dans laquelle l'élément de verrouillage est logé dans une gorge (162, 164) formée dans la surface de l'autre parmi la fiche de connexion (110) et le corps de connecteur (120), et une position de non-verrouillage dans laquelle ledit élément de verrouillage (130) est hors de ladite gorge, et où l'élément de rappel (150) contraint l'élément de verrouillage (130) en position de non-verrouillage,
et le connecteur électrique (100) étant **caractérisé en ce que** la polarisation magnétique de l'élément de verrouillage (130) est configurée de sorte que, lorsqu'un courant d'une intensité supérieure à un seuil prédéterminé traverse le connecteur électrique (100), l'élément de verrouillage (130) passe de ladite position de non-verrouillage à ladite position de verrouillage sous l'effet d'un champ magnétique induit par le courant traversant le connecteur électrique (100), et de sorte que, lorsque l'intensité du courant dans le connecteur électrique (100) passe sous ledit seuil prédéterminé, ledit élément de rappel (150) ramène l'élément de verrouillage (130) dans ladite position de non-verrouillage.

2. Connecteur électrique (100) selon la revendication 1, **caractérisé en ce que** l'élément de verrouillage (130) est un plot de forme au moins partiellement complémentaire à la forme de ladite gorge (162, 164), fixé sur l'élément de rappel (150), **en ce que** l'élément de rappel est un ressort fixé sensiblement perpendiculairement à la direction d'insertion (140), sur l'un parmi le corps de connecteur (120) et la fiche de connexion (110), et **en ce que** le plot est monté mobile selon une direction transversale à la direction d'insertion (140).

3. Connecteur électrique (100) selon l'une des revendications 1 et 2, **caractérisé en ce que** le système de verrouillage (130, 150) est monté sur le corps de connecteur (120).

4. Connecteur électrique (100) selon l'une des revendications 1 et 2, **caractérisé en ce que** le système de verrouillage (130, 150) est monté sur la fiche de connexion (110).

5. Connecteur électrique (100) selon l'une quelconque des revendications précédentes, **caractérisé en ce que** l'élément de verrouillage (130) présente une forme sphérique ou de section circulaire et **en ce que** la gorge (162, 164) présente une forme complémentaire à une forme sphérique ou à une section circulaire.

6. Connecteur électrique (100) selon la revendication 1, **caractérisé en ce que** l'élément de verrouillage (130) est une lamelle magnétisée et **en ce que** l'élément de rappel est une lamelle élastique (150), les deux lamelles étant fixées l'une à l'autre par l'une de leurs extrémités respectives.

7. Connecteur électrique (100) selon la revendication 1, **caractérisé en ce que** l'élément de verrouillage (130) est une partie centrale magnétisée et polarisée, **en ce que** l'élément de rappel (150) est une partie périphérique souple, préférentiellement élastique, fixée autour de la partie centrale.

8. Connecteur électrique (100) selon l'une quelconque des revendications précédentes, **caractérisé en ce qu'**il comprend une pluralité de systèmes de verrouillage (130, 150) répartis autour de la direction d'insertion (140).

9. Système électrique ou électronique configuré pour implémenter une ou des fonctions avioniques comprenant au moins un connecteur électrique (100) selon l'une quelconque des revendications précédentes.

10. Aéronef (6) comprenant au moins un système électrique ou électronique (100) selon la revendication précédente.

## Patentansprüche

1. Elektrischer Anschluss (100), umfassend:
- eine aus einem elektrisch leitfähigem Material ausgeführte Steckdose (122),
- einen Anschlusskörper (120), der aus einem elektrisch isolierenden Material ausgeführt ist und in welchem die Steckdose (122) fixiert ist, wobei der Anschlusskörper (120) einen den Zugang zu der Steckdose (122) ermöglichenden Hohlraum (160) aufweist,
- einen Verbindungsstecker (110), der aus einem elektrisch leitfähigem Material ausgeführt und ausgelegt ist, sich in den Hohlraum (160) entlang einer Einführrichtung (140) einzufügen und mit der Steckdose (122) in Kontakt zu kommen, und
- wobei der elektrische Anschluss (100) aufweist:
- ein Verriegelungssystem (130, 150), umfassend ein Verriegelungselement (130) und ein Rückstellelement (150),
das Verriegelungselement (130) weist ein polarisiertes ferromagnetisches Material auf und ist an dem einem unter dem Anschlusskörper (120) und dem Verbindungsstecker (110) beweglich zwischen einer Verriegelungsposition, in der das Verriegelungselement in einer in der Oberfläche des anderen unter dem Verbindungsstecker (110) und dem Anschlusskörper (120) ausgebildeten Nut (162, 164) aufgenommen ist, und einer unverriegelten Position, in der das Verriegelungselement (130) sich außerhalb der Nut befindet, montiert, und wobei das Rückstellelement (150) das Verriegelungselement (130) in die unverriegelte Position vorspannt,
und wobei der elektrische Anschluss (100) **dadurch gekennzeichnet ist, dass** die magnetische Polarisierung des Verriegelungselements (130) derartig ausgelegt ist, dass, wenn ein Strom mit einer Stärke größer als ein vorgegebener Schwellenwert durch den elektrischen Anschluss (100) fließt, das Verriegelungselement (130) unter der Einwirkung eines durch den durch den elektrischen Anschluss (100) fließenden Strom induzierten Magnetfeldes von der unverriegelten Position in die Verriegelungsposition gelangt, und derartig, dass, wenn die Stärke des Stroms in dem elektrischen Anschluss (100) unter den vorgegebenen Schwellenwert gelangt, das Rückstellelement (150) das Verriegelungselement (130) in die unverriegelte Position zurückbringt.

2. Elektrischer Anschluss (100) nach Anspruch 1, **dadurch gekennzeichnet, dass** das Verriegelungselement (130) ein Zapfen mit zumindest teilweise zu der Form der Nut (162, 164) komplementärer Form ist, der an dem Rückstellelement (150) fixiert ist, dass das Rückstellelement eine im Wesentlichen senkrecht zu der Einführrichtung (140) an dem Anschlusskörper (120) oder dem Verbindungsstecker (110) fixierte Feder ist und dass der Zapfen beweglich in einer Richtung quer zu der Einführrichtung (140) montiert ist.

3. Elektrischer Anschluss (100) nach einem der Ansprüche 1 und 2, **dadurch gekennzeichnet, dass** das Verriegelungssystem (130, 150) an dem Anschlusskörper (120) montiert ist.

4. Elektrischer Anschluss (100) nach einem der Ansprüche 1 oder 2, **dadurch gekennzeichnet, dass** das Verriegelungssystem (130, 150) an dem Verbindungsstecker (110) montiert ist.

5. Elektrischer Anschluss (100) nach einem der vorhergehenden Ansprüche, **dadurch gekennzeichnet, dass** das Verriegelungselement (130) eine kugelförmige Form oder einen kreisförmigen Querschnitt aufweist und dass die Nut (162, 164) eine einer kugelförmigen Form oder einem kreisförmigen Querschnitt komplementäre Form aufweist.

6. Elektrischer Anschluss (100) nach Anspruch 1, **dadurch gekennzeichnet, dass** das Verriegelungselement (130) eine magnetisierte Lamelle ist und dass das Rückstellelement eine elastische Lamelle (150) ist, wobei die beiden Lamellen mit einem ihrer jeweiligen Enden aneinander fixiert sind.

7. Elektrischer Anschluss (100) nach Anspruch 1, **dadurch gekennzeichnet, dass** das Verriegelungselement (130) ein magnetisierter und polarisierter zentraler Teil ist, und dass das Rückstellelement (150) ein flexibler, vorzugsweise elastischer, Umfangsteil ist, der um den zentralen Teil herum fixiert ist.

8. Elektrischer Anschluss (100) nach einem der vorhergehenden Ansprüche, **dadurch gekennzeichnet, dass** er eine Vielzahl von um die Einführrichtung (140) herum verteilten Verriegelungssystemen (130, 150) aufweist.

9. Elektrisches oder elektronisches System, das ausgelegt ist, eine oder mehrere Avionikfunktionen zu implementieren, aufweisend mindestens einen elektrischen Anschluss (100) nach einem der vorhergehenden Ansprüche.

10. Flugzeug (6), aufweisend mindestens ein elektrisches oder elektronisches System (100) nach dem vorhergehenden Anspruch.

## Claims

1. Electrical connector (100) comprising:
- a socket (122) made in an electrically conductive material,
- a connector body (120) made in an electrically insulating material and in which the socket (122) is fixed, where the connector body (120) has a cavity (160) allowing access to the socket (122),
- a connection plug (110) made in an electrically conductive material and configured to be inserted into the cavity (160) in a direction of insertion (140) and to come into contact with the socket (122), and,
- the electrical connector (100) comprising:
- a locking system (130, 150) comprising a locking element (130) and a return element (150),
the locking element (130) comprises a polarized ferromagnetic material and is movably mounted on one from among the connector body (120) and the connection plug (110) so as to be movable between a locking position in which the locking element is housed in a recess (162, 164) formed in the surface of the other from among the connection plug (110) and the connector body (120), and a non-locking position in which said locking element (130) is out of said recess, and where the return element (150) holds the locking element (130) in the non-locking position,
and the electrical connector (100) being **characterized in that** the magnetic polarization of the locking member (130) is configured such that, when a current whose intensity is higher than a predetermined threshold flows through the electrical connector (100), the locking element (130) switches from said non-locking position to said locking position under the effect of a magnetic field induced by the current flowing through the electrical connector (100), and such that, when the intensity of the current in the electrical connector (100) falls below said predetermined threshold, said return element (150) returns the locking element (130) to said non-locking position.

2. Electrical connector (100) according to Claim **1, characterized in that** the locking element (130) is a stud whose shape is at least partially complementary to the shape of said recess (162, 164), attached to the return element (150), **in that** the return element is a spring attached substantially perpendicularly to the direction of insertion (140) to one from among the connector body (120) and the connection plug (110), and **in that** the stud is mounted so as to be movable in a direction transverse to the direction of insertion (140).

3. Electrical connector (100) according to either of Claims 1 and 2, **characterized in that** the locking system (130, 150) is mounted on the connector body (120).

4. Electrical connector (100) according to either of Claims 1 and 2, **characterized in that** the locking system (130, 150) is mounted on the connection plug (110).

5. Electrical connector (100) according to any one of the preceding claims, **characterized in that** the shape of the locking element (130) is spherical or has a circular cross section and **in that** the shape of the recess (162, 164) is complementary to a spherical shape or to a circular cross section.

6. Electrical connector (100) according to Claim 1, **characterized in that** the locking element (130) is a magnetized strip and **in that** the return element is an elastic strip (150), the two strips being attached to one another by one of their respective ends.

7. Electrical connector (100) according to Claim 1, **characterized in that** the locking element (130) is a magnetized and polarized central portion and **in that** the return element (150) is a flexible, preferably elastic, peripheral portion, attached around the central portion.

8. Electrical connector (100) according to any one of the preceding claims, **characterized in that** it comprises a plurality of locking systems (130, 150) distributed around the direction of insertion (140).

9. Electrical or electronic system configured to implement one or more avionics functions comprising at least one electrical connector (100) according to any one of the preceding claims.

10. Aircraft (6) comprising at least one electrical or electronic system (100) according to the preceding claim.
